# EUROPEAN PATENT SPECIFICATION

(11) **EP 3 713 792 B1**
(45) Date of publication and mention of the grant of the patent: **30.06.2021**
(21) Application number: 18834071.5
(22) Date of filing: 12.11.2018
(51) Int. Cl.: B60R 9/048, B60R 9/10

(54) **DEVICE FOR TRANSPORTING BICYCLES ON MOTOR VEHICLES**
VORRICHTUNG ZUM TRANSPORT VON FAHRRÄDERN AN KRAFTFAHRZEUGEN
DISPOSITIF POUR TRANSPORTER DES BICYCLETTES SUR DES VÉHICULES À MOTEUR

(30) Priority: 21.11.2017 IT 201700132770
(43) Date of publication of application: 30.09.2020
(73) Proprietor: Aurilis Group Italia S.R.L., 12045 Fossano (CN) (IT)
(72) Inventor: GEMESIO, Matteo, 12045 Fossano (CN) (IT)
(74) Representative: Garavelli, Paolo
(86) International application number: PCT/IT2018/000146
(87) International publication number: WO 2019/102505

(56) References cited:
- EP-A1- 2 937 244
- EP-A1- 3 132 977
- WO-A1-2004/033258
- CN-A- 103 661 122
- US-A1- 2016 039 354
- US-A1- 2017 174 143
- US-S- D 789 276

## Description

The present invention refers to a device for transporting bicycles on motor vehicles, adapted to transport bicycles on the roof of a car. In particular the invention refers to a device for transporting bicycles on motor vehicles having catching means for keeping the bicycles in a vertical position, in order to allow fastening them having both hands free.

Devices for transporting bicycles on motor vehicles are known, and they can be connected to the roof of a car, and comprise a rotatable arm having catching means adapted to keep the bicycle in a vertical position, when the rotatable arm is taken in a lifted position, allowing to fasten the bicycle to the bicycle-carrier device having both hands free.

These devices for transporting bicycles on motor vehicles however are not satisfactory and have the problem of not allowing to easily operate on the rotatable arm, keeping the bicycle in a vertical position during its fastening to the bicycle-carrier device, when it is rotated to take it in the suitable position to fasten the catching means to a tube of the bicycle.

In fact, in known devices for transporting bicycles on motor vehicles, the bicycle, when is rested onto the device, is interposed between user and rotatable arm, preventing an easy rotation to take it in its vertical position and comfortably fasten the catching means to the bicycle.

Document EP-A1-3 132 977 discloses a device according to the preamble of Claim 1.

Object of the present invention is solving the above prior art problems, by providing a device for transporting bicycles on motor vehicles equipped with a rotatable arm, having catching means to keep the bicycle in a vertical position and adapted to be easily rotated by a user to take it in the position adapted to fasten the catching means to the bicycle, allowing the following fastening of the bicycle to the device bicycle-carrier device having both hands free.

The above and other objects and advantages of the invention, as will appear from the following description, are obtained with a device for transporting bicycles on motor vehicles as claimed in Claim 1. Preferred embodiments and non-trivial variations of the present invention are the subject matter of the dependent claims.

It will be immediately obvious that numerous variations and modifications (for example related to shape, sizes, arrangements and parts with equivalent functionality) can be made to what is described, without departing from the scope of the present invention as appears from the enclosed claims.

The present invention will be better described by some preferred embodiments thereof, provided as a non-limiting example, with reference to the enclosed drawings, in which:

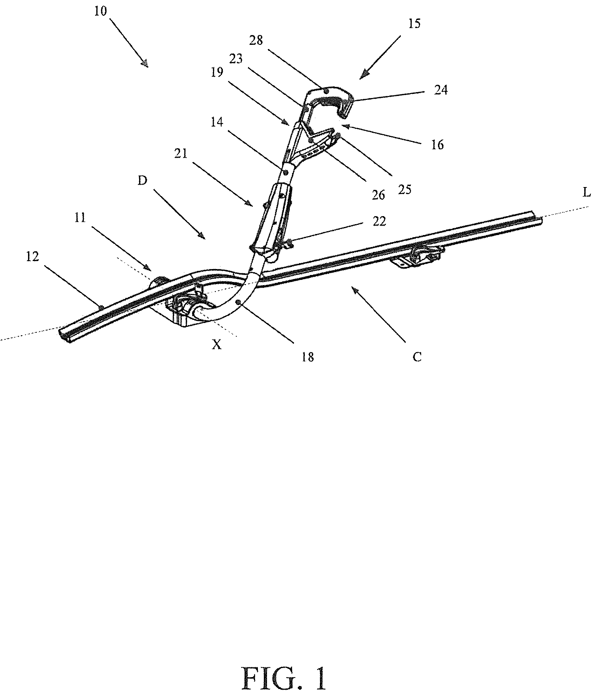

- Figure 1 shows a perspective view of a device for transporting bicycles on motor vehicles according to the present invention;

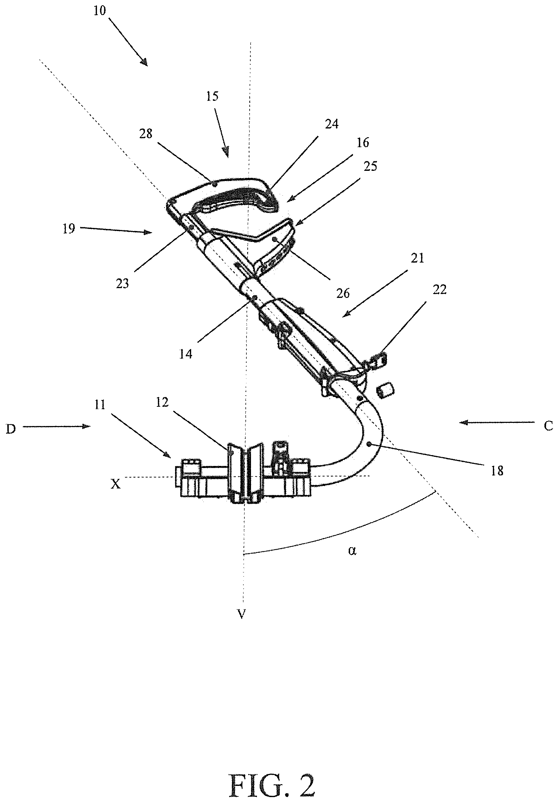

- Figure 2 shows a front view of a device for transporting bicycles on motor vehicles according to the present invention;

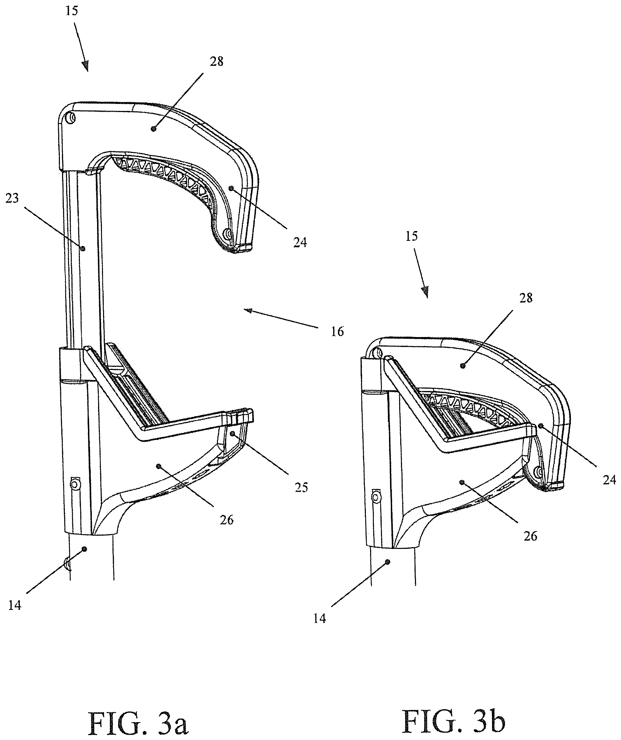

- Figure 3a shows a part of a device for transporting bicycles on motor vehicles according to the present invention in a first configuration; and
- Figure 3b shows a part of a device for transporting bicycles on motor vehicles according to the present invention in a second configuration.

With reference to the Figures, the device 10 for transporting bicycles on motor vehicles of the invention comprises a small channel 12 connectable through supporting means to the roof of a motor vehicle, for example connectable to a pair of bars applied to the roof of a car, a rotatable arm 14 connected to the small channel 12 and catching means 15 connected to the rotatable arm 14, to catch the bicycle and keep it in a vertical position when its wheels are abutted onto the small channel 12, said rotatable arm 14 comprising a lower part 18 connected rotating to the small channel 12 and arranged laterally thereto, in order to find itself, with respect to a longitudinal direction L of the small channel 12, on the loading part C of the bicycle on the device 10 to allow a user to easily grasp the lower part 18 of the rotatable arm 14, enabling its rotation and the following blocking of the bicycle on the device 10 having both hands free, said rotatable arm 14 further comprising an upper part 19, connected to the catching means 15, arranged laterally to the small channel 12 on the opposite side D with respect to the lower part 18, namely on the side of the small channel 12 opposite to the one on which the lower part 18 is arranged.

Preferably, the lower part 18 of the rotatable arm 14 is curved, in order to form a grasping area by the user to allow him to easily grasp the rotatable arm 14 and enable its rotation, and the catching means 15 connected to the rotatable arm 14 have an opening 16 oriented towards the loading part C of the bicycle on the device 10, to block the bicycle and keep it in a vertical position when its wheels are abutted onto the small channel 12.

In a preferred way, the rotatable arm 14 comprises an intermediate part 21 inclined by an angle α with respect to a vertical direction V in which the bicycle is when it is fastened on the device 10, and is rotatable around an axis X which is transverse, preferably perpendicular, to the longitudinal direction L of the small channel 12.

In a preferred way, the rotatable arm 14 has a tubular shape, for example is made of aluminum, and is connected to the small channel 12 through connecting means 11 of a known type, and the small channel 12 is adapted to be assembled on the roof of a motor vehicle through supporting means of a known type, comprising, for example, a front support, a rear support, a pair of all-carrier bars applicate to the roof of a car, to which the supports are connected; the device 10 for transporting bicycles on motor vehicles of the invention further comprises fastening means of the bicycle to the small channel, for example wheel-supporting cradles and wheel-locking straps, also of a known type.

Preferably, the catching means 15 comprise a first jaw 26 fastened to the rotatable arm 14, and a second mobile jaw 28 adapted to be closed, through actuating means 22 of a known type, against the first fixed jaw 26 to tighten the catching means 15 around the frame of a bicycle, and block it in a vertical position with the wheels abutted onto the small channel 12; similarly, the actuating means 22 are adapted to open the catching means 15, by moving the second mobile jaw 28 away from the first jaw 26 fastened to the rotatable arm 14.

In a preferred way, the second mobile jaw 28 is connected sliding to the rotatable arm 14, more preferably is connected to a tube 23 sliding inside the rotatable arm 14.

Preferably, the second mobile jaw 28 comprises an end 24 configured to be inserted inside a seat 25 obtained in the first jaw 26, composed for example of a groove 25 inside which a shaped profile of the end 24 is inserted, to firmly block the jaws 26, 28 once closed around the bicycle frame, and perform a safe and anti-theft locking of the bicycle.

In the operation of the device 10 for transporting bicycles on motor vehicles according to the present invention, the user is on the loading part C of the bicycle, with respect to a longitudinal direction L of the small channel 12, and grasps the lower part 18 of the rotatable arm 14 to rotate it and take it in a vertical position, in which the catching means 15 are in the suitable position to block the frame of the bicycle, when this latter one is loaded on the device 10; the user then lifts the bicycle and places it on the device 10, with the wheels abutted on the small channel 12, and blocks the catching means 15 on the frame, for example by sliding the second mobile jaw 28 till it closes against the first jaw 26, in particular by sliding the tube 23 inside the rotatable arm 14 in order to insert the end 24 of the second mobile jaw 28 inside the seat 25 obtained in the first jaw 26, to perform a safe and anti-theft locking of the bicycle.

Advantageously, the device 10 for transporting bicycles on motor vehicles of the invention allows easily rotating the rotatable arm, having catching means to keep the bicycle in a vertical position, to take it in the suitable position to fasten the catching means to the bicycle, allowing the following fastening of the bicycle to the bicycle-carrier device having both hands free.

Advantageously, the device 10 for transporting bicycles on motor vehicles of the invention, due to the end 24 of the second mobile jaw 28 adapted to be inserted inside the seat 25 obtained in the first jaw 26, allows performing a safe and anti-theft locking of the bicycle.

## Claims

1. Device (10) for transporting bicycles on motor vehicles comprising:
- a small channel (12) connectable through supporting means to the roof of a motor vehicle,
- an arm (14) connected rotating to the small channel (12), and
- catching means (15) connected to the rotatable arm (14) to catch the bicycle and keep it in a vertical position when its wheels are abutted onto the small channel (12), said rotatable arm (14) comprising a lower part (18) connected rotating at an axis (X) to the small channel (12) and arranged laterally thereto, in order to find itself, with respect to a longitudinal direction (L) of the small channel (12), on the loading part (C) of the bicycle on the device (10), said rotatable arm (14) comprising an upper part (19) connected to the catching means (15) and arranged laterally to the small channel (12) on the opposite side (D) with respect to the lower part (18), to allow a user to easily grasp the lower part (18) of the rotating arm (14), enabling its rotation and the following blocking of the bicycle on the device (10) keeping it in its vertical position, the catching means (15) connected to the rotatable arm (14) having an opening (16) oriented towards the loading part (C) of the bicycle on the device (10), to block the bicycle and keep it in its vertical position when its wheels are abutted onto the small channel (12), **characterized in that** the lower part (18) is located between the axis (X) and the upper part (19) .

2. Device (10) for transporting bicycles on motor vehicles according to claim 1, **characterized in that** the lower part (18) of the rotatable arm (14) is curved, in order to form a grasping area by the user to allow him to easily grasp the rotatable arm (14) and enable its rotation.

3. Device (10) for transporting bicycles on motor vehicles according to claim 1 or 2, **characterized in that** the catching means (15) connected to the rotatable arm (14) are arranged laterally to the small channel (12) on the opposite side (D) with respect to the lower part (18), to block the bicycle and keep it in a vertical position when its wheels are abutted on the small channel (12).

4. Device (10) for transporting bicycles on motor vehicles according to any one of the previous claims, **characterized in that** the rotatable arm (14) comprises an intermediate part (21) inclined by an angle (α) with respect to a vertical direction (V) in cui the bicycle is when it is fastened on the device (10).

5. Device (10) for transporting bicycles on motor vehicles according to any one of the previous claims, **characterized in that** the axis (X), around which the rotatable arm (14) is rotatable, is transverse to the longitudinal direction (L) of the small channel (12).

6. Device (10) for transporting bicycles on motor vehicles according to any one of the previous claims, **characterized in that** the catching means (15) comprise a first jaw (26) fastened to the rotatable arm (14), and a second mobile jaw (28) adapted to be closed against the first fixed jaw (26) to tighten the catching means (15) around the frame of a bicycle, and block it in a vertical position with the wheels abutted onto the small channel (12).

7. Device (10) for transporting bicycles on motor vehicles according to claim 6, **characterized in that** the second mobile jaw (28) is connected sliding to the rotatable arm (14).

8. Device (10) for transporting bicycles on motor vehicles according to claim 6 or 7, **characterized in that** the second mobile jaw (28) comprises an end (24) configured to be inserted inside a seat (25) obtained in the first jaw (26), to firmly block the jaws (26, 28) once closed around the bicycle frame, and perform a safe and anti-theft locking of the bicycle.

9. Device (10) for transporting bicycles on motor vehicles according to claim 8, **characterized in that** the seat (25) is composed of a groove (25) inside which the shaped profile of the end (24) is designed to be inserted.

## Patentansprüche

1. Vorrichtung (10) zum Transportieren von Fahrrädern in Kraftfahrzeugen, umfassend:
- einen Kanal (12), der mittels Stützmitteln mit dem Dach eines Kraftfahrzeugs verbunden werden kann,
- einen Arm (14), der drehbar mit dem Kanal (12) verbunden ist, und
- Greifmittel (15), die mit dem drehbaren Arm (14) verbunden sind, um das Fahrrad zu greifen und es in vertikaler Position zu halten, wenn seine Räder auf der Nut (12) ruhen, wobei der drehbare Arm (14) einen verbundenen unteren Teil (18) umfasst zum Kanal (12) drehen und seitlich dazu angeordnet sein, so dass in Bezug auf eine Längsrichtung (L) des Kanals (12) auf dem Ladeteil (C) des Fahrrads an der Vorrichtung (10) liegt), **gekennzeichnet durch** die Tatsache, dass der drehbare Arm (14) einen oberen Teil (19) umfasst, der mit dem Greifmittel (15) verbunden und seitlich zum Kanal (12) auf der gegenüberliegenden Seite (D) in Bezug auf den unteren Teil angeordnet ist (18), damit ein Benutzer den unteren Teil (18) des drehbaren Arms (14) leicht greifen kann, wodurch seine Drehung und das anschließende Verriegeln des Fahrrads an der Vorrichtung (10) erleichtert werden, indem es in einer vertikalen Position gehalten wird, wobei das Greifen erfolgt Mittel (15), die mit dem drehbaren Arm (14) verbunden sind und eine Öffnung aufweisen (16) dem Ladeteil (C) des Fahrrads auf die Vorrichtung (10) zugewandt sein, um das Fahrrad zu blockieren und es in vertikaler Position zu halten, wenn seine Räder auf der Nut (12) ruhen, **gekennzeichnet durch** die Tatsache, dass der untere Teil (18) befindet sich zwischen der Achse (X) und der Oberseite (19).

2. Vorrichtung (10) zum Transportieren von Fahrrädern in Kraftfahrzeugen nach Anspruch 1, **dadurch gekennzeichnet, dass** der untere Teil (18) des Schwenkarms (14) gekrümmt ist, um einen Greifbereich für den Benutzer zu bilden, damit dieser leicht greifen kann den Dreharm (14) und erleichtern seine Drehung.

3. Vorrichtung (10) zum Transportieren von Fahrrädern in Kraftfahrzeugen nach Anspruch 1 oder 2, **dadurch gekennzeichnet, dass** die mit dem Schwenkarm (14) verbundenen Greifmittel (15) seitlich zum Kanal (12) auf der gegenüberliegenden Seite (D) angeordnet sind. in Bezug auf den unteren Teil (18), um das Fahrrad zu blockieren und es in vertikaler Position zu halten, wenn seine Räder auf der Nut (12) ruhen.

4. Vorrichtung (10) zum Transportieren von Fahrrädern in Kraftfahrzeugen nach einem der vorhergehenden Ansprüche, **dadurch gekennzeichnet, dass** der drehbare Arm (14) einen in einem Winkel (α) gegenüber einer vertikalen Richtung (V) geneigten Zwischenteil (21) aufweist) in dem sich das Fahrrad befindet, wenn es am Gerät (10) befestigt ist.

5. Vorrichtung (10) zum Transportieren von Fahrrädern in Kraftfahrzeugen nach einem der vorhergehenden Ansprüche, **gekennzeichnet dadurch, dass** die Achse (X), um die der drehbare Arm (14) drehbar ist, quer zur Längsrichtung (L) verläuft. der Nut (12).

6. Vorrichtung (10) zum Transportieren von Fahrrädern in Kraftfahrzeugen gemäß einem der vorhergehenden Ansprüche, **gekennzeichnet dadurch, dass** die Greifmittel (15) eine erste Backe (26) umfassen, die an dem drehbaren Arm (14) befestigt ist, und eine zweite Backe beweglich (28), angepasst zum Schließen gegen die erste feste Backe (26), um das Greifmittel (15) um den Rahmen eines Fahrrads zu klemmen und es in einer vertikalen Position zu verriegeln, wobei die Räder auf der Nut (12) ruhen.

7. Vorrichtung (10) zum Transportieren von Fahrrädern in Kraftfahrzeugen nach Anspruch 6, **dadurch gekennzeichnet, dass** die zweite bewegliche Backe (28) verschiebbar mit dem drehbaren Arm (14) verbunden ist.

8. Vorrichtung (10) zum Transportieren von Fahrrädern in Kraftfahrzeugen nach Anspruch 6 oder 7, **dadurch gekennzeichnet, dass** die zweite bewegliche Backe (28) ein Ende (24) aufweist, das konfiguriert ist, um in einen Sitz (25) eingeführt zu werden, der in der ersten Backe erhalten ist (26) um die Backen (26, 28) fest zu verriegeln, sobald sie um den Fahrradrahmen geschlossen sind, und um eine sichere und diebstahlsichere Verriegelung des Fahrrads zu gewährleisten.

9. Vorrichtung (10) zum Transportieren von Fahrrädern in Kraftfahrzeugen nach Anspruch 8, **dadurch gekennzeichnet, dass** der Sitz (25) aus einer Nut (25) besteht, in die ein geformtes Profil des Endes (24) eingesetzt werden kann.

## Revendications

1. Dispositif (10) de transport de bicyclettes sur des véhicules automobiles comprenant:
- un canal (12) qui peut être relié au toit d'un véhicule automobile au moyen de moyens de support,
- un bras (14) relié en rotation au canal (12), et
- des moyens de préhension (15) reliés au bras rotatif (14) pour saisir le vélo et le maintenir en position verticale lorsque ses roues reposent sur la rainure (12), ledit bras rotatif (14) comprenant une partie inférieure (18) reliée rotatif au canal (12) et disposé latéralement à celui-ci, de manière à être, par rapport à une direction longitudinale (L) du canal (12), sur la partie de chargement (C) de la bicyclette sur le dispositif (10), **caractérisé en ce que** ledit bras rotatif (14) comprend une partie supérieure (19) reliée aux moyens de préhension (15) et disposée latéralement au canal (12) du côté opposé (D) par rapport à la partie inférieure (18), pour permettre à un utilisateur de saisir facilement la partie inférieure (18) du bras rotatif (14), facilitant sa rotation et le verrouillage ultérieur du vélo sur le dispositif (10) en le maintenant en position verticale, les moyens de préhension (15) connecté au bras rotatif (14) ayant une ouverture (16) face à la partie de chargement (C) du vélo sur le dispositif (10), pour bloquer le vélo et le maintenir en position verticale lorsque ses roues reposent sur la rainure (12), **caractérisé par le fait que** la partie inférieure (18) est situé entre l'axe (X) et le haut (19).

2. Dispositif (10) de transport de vélos sur des véhicules automobiles selon la revendication 1, **caractérisé en ce que** la partie inférieure (18) du bras pivotant (14) est courbée, de manière à former une zone de préhension pour l'utilisateur pour lui permettre de la saisir facilement le bras rotatif (14) et facilitent sa rotation.

3. Dispositif (10) pour le transport de vélos sur des véhicules automobiles selon la revendication 1 ou 2, **caractérisé en ce que** les moyens de préhension (15) reliés au bras pivotant (14) sont disposés latéralement au canal (12) du côté opposé (D) par rapport à la partie inférieure (18), pour bloquer la bicyclette et la maintenir en position verticale lorsque ses roues reposent sur la rainure (12).

4. Dispositif (10) de transport de bicyclettes sur des véhicules automobiles selon l'une quelconque des revendications précédentes, **caractérisé en ce que** le bras rotatif (14) comprend une partie intermédiaire (21) inclinée d'un angle (α) par rapport à une direction verticale (V) dans laquelle se trouve la bicyclette lorsqu'elle est fixée sur le dispositif (10).

5. Dispositif (10) de transport de bicyclettes sur des véhicules automobiles selon l'une quelconque des revendications précédentes, **caractérisé en ce que** l'axe (X), autour duquel le bras rotatif (14) peut tourner, est transversal à la direction longitudinale (L) de la rainure (12).

6. Dispositif (10) de transport de vélos sur des véhicules automobiles selon l'une quelconque des revendications précédentes, **caractérisé en ce que** les moyens de préhension (15) comprennent une première mâchoire (26) fixée au bras rotatif (14), et une deuxième mâchoire mobile (28) adapté pour être fermé contre la première mâchoire fixe (26) pour serrer les moyens de préhension (15) autour du cadre d'une bicyclette, et le verrouiller en position verticale avec les roues reposant sur la rainure (12).

7. Dispositif (10) de transport de bicyclettes sur des véhicules automobiles selon la revendication 6, **caractérisé en ce que** la deuxième mâchoire mobile (28) est reliée de manière coulissante au bras rotatif (14).

8. Dispositif (10) de transport de vélos sur des véhicules automobiles selon la revendication 6 ou 7, **caractérisé en ce que** la deuxième mâchoire mobile (28) comprend une extrémité (24) configurée pour être insérée à l'intérieur d'un siège (25) obtenu dans la première mâchoire (26) pour verrouiller fermement les mâchoires (26, 28) une fois fermées autour du cadre du vélo, et pour assurer un verrouillage sûr et antivol du vélo.

9. Dispositif (10) de transport de bicyclettes sur des véhicules automobiles selon la revendication 8, **caractérisé en ce que** le siège (25) est constitué d'une rainure (25) dans laquelle un profil profilé de l'extrémité (24) peut être inséré.
